# EUROPÄISCHE PATENTSCHRIFT

(11) **EP 2 326 960 B1**
(45) Veröffentlichungstag und Bekanntmachung des Hinweises auf die Patenterteilung: **06.06.2012**
(21) Anmeldenummer: 09781666.4
(22) Anmeldetag: 10.08.2009
(51) Int. Cl.: G01P 3/489, G01P 15/16, F02D 41/34

(54) **VERFAHREN ZUR DYNAMIKANGEPASSTEN ERFASSUNG EINER WINKELGESCHWINDIGKEIT MIT EINEM DIGITALEN WINKELGEBER**
METHOD FOR DYNAMICALLY DETECTING AN ANGULAR VELOCITY USING A DIGITAL ANGULAR POSITION TRANSDUCER
PROCÉDÉ POUR LA DÉTECTION, ADAPTÉE À LA DYNAMIQUE, D UNE VITESSE ANGULAIRE AVEC UN CAPTEUR ANGULAIRE NUMÉRIQUE

(30) Priorität: 18.08.2008 DE 102008041307
(43) Veröffentlichungstag der Anmeldung: 01.06.2011
(73) Patentinhaber: Robert Bosch GmbH, 70442 Stuttgart (DE)
(72) Erfinder: DAMSON, Mark, 70499 Stuttgart (DE); MERKEL, Tino, 71701 Schwieberdingen (DE); RAICHLE, Daniel, 71735 Eberdingen-Nussdorf (DE)
(86) Internationale Anmeldenummer: PCT/EP2009/060336
(87) Internationale Veröffentlichungsnummer: WO 2010/020554

(56) Entgegenhaltungen:
- WO-A-01/77692
- DE-A1- 3 401 751
- DE-A1- 19 721 488
- EMBERSON M: "SMOOTHING ALGORITHM FOR VEHICLE AND ENGINE SPEED DETECTION THAT REMOVES GEARBOX AND SENSOR JITTER" 1. Juni 1999 (1999-06-01), MOTOROLA TECHNICAL DEVELOPMENTS, MOTOROLA INC. SCHAUMBURG, ILLINOIS, US, PAGE(S) 103 - 107 , XP000906053 ISSN: 0887-5286 das ganze Dokument

## Beschreibung

### Stand der Technik

Die Erfindung geht aus von Drehgeschwindigkeitserfassungen mittels digitalen Winkelgebers, der die Lage eines Geberrads erfasst. Zur Erfassung der Drehgeschwindigkeit einer Welle, beispielsweise einer Welle einer elektrischen Maschine, wird ein Geberrad mit der Welle verbunden und die Drehung wird durch Erfassung von Markierungen am Rand des Geberrads umfasst. Die Markierungen entsprechen bestimmten Winkelpositionen, so dass das Winkelgebersignal die Zeitpunkte angibt, an denen bestimmte Winkelpositionen vorliegen, beispielsweise mittels einer Taktflanke. Die Winkelposition bzw. die Winkelgeschwindigkeit wird somit nicht unmittelbar gemessen, sondern aus der Zeitdauer berechnet, die zwischen zwei Zeitpunkten liegt, die zwei verschiedenen aufeinander folgenden Winkelpositionen entspricht. Die erfasste Momentanwinkelgeschwindigkeit ist somit von einem Fehler beaufschlagt, der sich durch ungenaue Anordnung von Markierungen des Geberrads ergibt. Ist beispielsweise das Geberrad nicht hochpräzise gefertigt oder sind die Markierungen deformiert oder verschmutzt, so ergeben sich durch diese Fehler zeitlich verschobene Winkelpositionssignale, die im Verlauf der Drehung zu einer schwankenden Momentanwinkelgeschwindigkeit führen, obwohl das Geberrad tatsächlich mit konstanter Geschwindigkeit gedreht wird.

Das Winkelgeschwindigkeitssignal ist somit mit einem Rauschen beaufschlagt, das insbesondere bei dynamischen Regelvorgängen störend auf die Dynamik wirkt. Beispielsweise bei elektrischen Maschinen oder Verbrennungsmotoren, insbesondere bei elektrischen Maschinen, die zum Antrieb eines Hybridfahrzeugs oder Elektrofahrzeugs dienen, muss die Winkelgeschwindigkeit mit sehr kurzen Reaktionszeiten hochdynamisch geregelt werden.

Eine Mittelung der Winkelgeschwindigkeit über eine Zeitdauer oder über eine oder mehrere Umdrehungen würde insbesondere die hochfrequenten Anteile aus dem Winkelsignal entfernen, die zur präzisen dynamischen Steuerung notwendig sind. Somit kann das durch Geberradungenauigkeiten hervorgerufenen Rauschen nicht durch Mittelung reduziert werden, ohne gravierende Nachteile in der Dynamik des Sensorsignals hervorzurufen.

Die Druckschrift DE 102 00 504 7088 A1 betrifft ein Verfahren zur Erzeugung eines simulierten Geberverlaufs, wenn in einer Geberscheibe eine Markierungslücke auftritt. Hierbei wird aus den messenden Winkelpositionssignalen ein weiterer Winkelpositionsverlauf extrapoliert, um die Lücke zu schließen. Die Druckschrift betrifft im Wesentlichen die Extrapolation von Winkelsignalen und ist nicht auf die Erfassung von Winkelgeschwindigkeiten fokussiert. Insbesondere betrachtet die Druckschrift keine Fehler, die durch fehlerhafte Anordnung von Zähnen entstehen, sondern betrifft das Schließen von Lücken, die sich durch vollständig fehlende Markierungen des Geberrads ergeben.

Die Druckschrift DE 102 58 846 A1 beschreibt eine Einrichtung zur Drehwinkelerfassung, die es ermöglicht, eine Aussage über die absolute Winkellage zu treffen. Wie auch in der vorgenannten Druckschrift wird in dieser Druckschrift ein Winkelgeschwindigkeitssignalfehler aufgrund von Ungenauigkeiten des Gebersignals nicht näher betrachtet.

Aus der WO 01/77692 A2 ist ein Verfahren zur Drehzahl- und/oder Winkelerfassung an rotierenden Bauteilen einer Verbrennungskraftmaschine mit einem Geberrad bekannt, an dessen Umfangsfläche Zähne aufgenommen sind, die von einem oder mehreren Signalgebem abgetastet werden, die die Zeitdifferenz zweier aufeinanderfolgender Zähne ermitteln. Die gemessenen Segmentzeiten werden innerhalb einer Korrekturroutine entweder anhand eines Referenzmodelles oder anhand eines Ordnungsfilters um die Fehler des Geberrades korrigiert.

Aus der DE 3401751 A1 ist eine Einrichtung bekannt, in der gemittelte Drehzahldaten berechnet werden, die entsprechend einer Änderungsgeschwindigkeit verbessert werden, um einen Fehler in der Motordrehzahl aufgrund der gemittelten Drehzahldaten zu korrigieren.

Winkelerfassungsmechanismen gemäß dem Stand der Technik weisen somit bei hochdynamischen Regelungsvorgängen den Nachteil auf, dass Ungenauigkeiten des Geberrads zu unnötigen Reglerausgleichsvorgängen fuhren. Zum einen sind die unnötigen Reglerausgleichsvorgänge auch deshalb nachteilig, da diese zu kritischen Spitzenströmen führen können, und zum anderen ist eine erhöhte Präzision des Geberrads direkt verknüpft mit deutlich höheren Kosten und höherer Anfälligkeit gegenüber Schmutz und Verformung.

Es ist daher eine Aufgabe der Erfindung, eine Winkelerfassungsmechanik vorzusehen, die ein besseres Regelverhalten auch bei dynamischen Vorgängen ermöglicht.

### Offenbarung der Erfindung

Die Erfindung ermöglicht eine deutliche Verringerung des Fehlers, der sich durch Ungenauigkeiten des Geberrads ergibt, wobei gleichzeitig die Dynamik bei Geschwindigkeitsänderungen nicht verringert ist. Somit können auch kostengünstigere Winkelgeber mit einem Geberrad verwendet werden, das mit gewissen Fertigungstoleranzen behaftet ist. Gleichzeitig ermöglicht die Erfindung die sofortige Erkennung von tatsächlichen Winkelgeschwindigkeitsänderungen, die durch eine Beschleunigung der Welle auftreten, wobei Geschwindigkeitsänderungen in vollem Umfang und mittelbar erfasst werden. Somit kann die Winkelgeschwindigkeit hochdynamisch geregelt werden, ohne jedoch unerwünschte Regelungsvorgänge auszulösen, die sich durch Ungenauigkeiten des Geberrads (und nicht durch Winkelgeschwindigkeitsänderungen) ergeben.

Das der Erfindung zugrunde liegende Konzept liegt darin, die zeitdiskreten Winkelpositionssignale bzw. die daraus berechneten Winkelgeschwindigkeiten nicht unmittelbar weiterzugeben. Bei Abweichungen zwischen zwei aufeinander folgenden Erfassungszeitpunkten (die aufeinander folgenden Winkelpositionen zugeordnet sind) werden diese nicht unmittelbar als neuer Wert in Form eines treppenartigen Sprungs weitergegeben, sondern es wird erfindungsgemäß ein Winkelgeschwindigkeitssignalverlauf abgegeben, der zwischen zwei aufeinander folgenden Winkelpositionen kontinuierlich entsprechend des Vorzeichens der Winkelgeschwindigkeitsdifferenz ansteigt oder abfällt. Somit wird die zeitdiskret erfasste Winkelgeschwindigkeit wiedergegeben, jedoch nicht als Abfolge sprunghafter Verläufe, sondern als kontinuierlich steigende oder abfallende Linie.

In einer besonders bevorzugten Ausführungsform steigt der Winkelgeschwindigkeitsverlauf nicht auf den vollständigen neu erfassten Winkelgeschwindigkeitswert an, sondern lediglich auf einen Anteil hiervon, der (positiv ist und) kleiner als eins ist. Diese bevorzugte Ausführungsform wird vorzugsweise mit einem Schwellwert kombiniert, mit dem Winkelgeschwindigkeitsänderungen verglichen werden.Bei einer Geschwindigkeitsänderung unterhalb des Schwellwerts wird die Geschwindigkeitsänderung nicht vollständig sondern nur als Anteil weitergegeben, und oberhalb des Schwellwerts wird die Geschwindigkeitsänderung unmittelbar und vollständig als steigende oder fallende Flanke weitergegeben. Dadurch ergibt sich bei geringen Winkelgeschwindigkeitsänderungen, wie sie durch Ungenauigkeiten des Geberrades erfolgen, dass tatsächlich nicht stattfindende Geschwindigkeitsänderungen und nur durch das Geberrad erzeugte Änderungen zum einen nicht sprunghaft und zum anderen nicht vollständig zur Winkelgeschwindigkeitsregelung angezeigt werden. Bei tatsächlichen Beschleunigungen, bei denen die Winkelgeschwindigkeitsänderung über dem Schwellwert liegt, wird diese sofort und unmittelbar an die Regelung weitergegeben, so dass die gemessene momentane Winkelgeschwindigkeit ausgeben wird und die Regelung in gewohnter Weise auf Winkelgeschwindigkeitsänderungen reagieren kann.

Für den Schwellwert wird daher vorzugsweise ein Wert gewählt, der den üblichen von Geberradungenauigkeiten erzeugten Schwankungen bei der Winkelerfassung entspricht. Da die Ungenauigkeiten in direkter Weise einen Winkelfehler verursachen und sich nicht unmittelbar auf eine Winkelgeschwindigkeit (und deren Fehler) beziehen, wird der Schwellwert bezogen auf einen Winkel konstant vorgesehen, d.h. wird beispielsweise zur Winkelgeschwindigkeit normiert durch Division durch die aktuelle Drehzahl. Mit anderen Worten nimmt der Schwellwert vorzugsweise mit zunehmender Drehzahl ab, da der Schwellwert zur Ausblendung von Fehlern in der absoluten Winkelerfassung dient, die sich bei hohen Drehzahlen stärker auf Winkelgeschwindigkeiten auswirken als bei niedrigen Drehzahlen. Die Normierung kann ferner durchgeführt werden durch Multiplikation mit dem Faktor Normierungsdrehzahl / momentane Drehzahl, wobei die Normierungsdrehzahl frei gewählt werden kann und konstant ist. Gleichzeitig sollte der Schwellwert die dynamischen Anforderungen der Regelung berücksichtigen und unter einem Wert sein, der Geschwindigkeitssprüngen entspricht, die eine (schnelle) Reaktion des Reglers erfordern, d.h. Geschwindigkeitssprünge, deren Betragshöhe auf eine tatsächliche Beschleunigung schließen lässt und die sich nicht nur durch Geberradfehler bzw. -rauschen erklären. Anstatt den Schwellwert auf die Drehzahl zu normieren, kann auch die erfasste Geschwindigkeitsänderung (auf eine Normdrehzahl) normiert werden, und es kann ein konstanter Schwellwert (oder Schwellwerte wie im Weiteren beschrieben) verwendet werden.

Anstatt anhand eines Schwellwerts zu entscheiden, ob der eine oder der andere der beiden oben genannten Betriebsmodi verwendet wird, kann auch ein (kontinuierliches) Gewichtungsverfahren verwendet werden, bei dem die per Anteilsfaktor und linearem Verlauf abgeschwächte Winkelgeschwindigkeitsänderung umso weniger bei der Ausgabe des Winkelgeschwindigkeitssignals berücksichtigt wird, je größer die erfasste Winkelgeschwindigkeitsänderung ist, wobei die Gewichtung der klassischen unmittelbaren direkten Weitergabe der Winkelgeschwindigkeit umso mehr erhöht wird, je größer die Winkelgeschwindigkeitsänderung ist. Ferner können hierzu zwei Schwellwerte verwendet werden, wobei bei einer Winkelgeschwindigkeitsänderung unterhalb eines ersten Schwellwerts das ausgegebene Winkelgeschwindigkeitssignal nur eine anteilige Winkelgeschwindigkeitsänderung mit kontinuierlichem (steigenden oder abfallenden) Verlauf verwendet wird, wohingegen oberhalb eines zweiten Schwellwerts ausschließlich die erfasste Winkelgeschwindigkeitsänderung unmittelbar und vollständig in das ausgegebene Winkelgeschwindigkeitssignal einfließt. Zur Regelung wird dann das ausgegebene Winkelgeschwindigkeitssignal verwendet.

Im Wesentlichen beruht das der Erfindung zugrunde liegende Konzept darauf, dass zumindest bei geringen Winkelgeschwindigkeitsänderungen die Winkelgeschwindigkeitsänderung nicht unmittelbar und vollständig weitergegeben wird, sondern lediglich als Anteil, und vorzugsweise kontinuierlichen ansteigenden oder abfallenden Verlaufs, und nicht in Form einer Flanke, wie sie bei Winkelsignalen mit zeitdiskreten, d. h. winkeldiskreten Winkelerfassungen auftritt. Mit zeitdiskreter Winkelerfassung werden hier Erfassungsmechanismen bezeichnet, bei denen nur an bestimmten Winkelpositionen entsprechende Signale, insbesondere Zeitmarken erfasst werden, wobei die Zeitmarken üblicherweise als Flankenverläufe zwischen zwei verschiedenen Pegeln innerhalb eines zeitkontinuierlichen Signals wiedergegeben werden, so dass aufgrund der beiden verwendeten Pegel diese Art und Weise der Erfässung auch als digitale Winkelerfassung bezeichnet wird. Wesentlich ist jedoch, dass die Winkelerfassung nicht kontinuierlich stattfindet, so dass zu jedem (beliebigen) Zeitpunkt eine Winkelposition abgegeben wird, sondern lediglich an einzelnen Winkelpositionen. Da durch die Drehbewegung die einzelnen Zeitpunkte mit bestimmten Winkelpositionen eindeutig verknüpft sind, kann die diskrete Winkelerfassung, auf der die Erfindung basiert, sowohl als zeitdiskrete als auch als winkeldiskrete Erfassung betrachtet werden.

Erfindungsgemäß werden Zeitdauern zwischen zwei von einer Vielzahl von Winkelpositionen erfasst, wobei die Winkelgeschwindigkeit aus dem überstrichenen Winkel geteilt durch die zugehörige Zeitdauer ermittelt wird. Dies wird erfindungsgemäß regelmäßig durchgeführt, d. h. vorzugsweise jedes Mal, wenn eine bestimmte Winkelsensorposition eingenommen wird, die mit einem entsprechenden Signalmerkmal, beispielsweise einer Flanke, einhergeht. Um eine Winkelgeschwindigkeit zu ermitteln, wird ein erster und ein zweiter Zeitpunkt erfasst, bei dem bestimmte Winkelsensorpositionen eingenommen werden, wobei sich die Winkelgeschwindigkeit aus dem überstrichenen Winkel geteilt durch die verstrichene Zeit ergibt. In gleicher Weise wird auch eine zweite Winkelgeschwindigkeit erfasst, vorzugsweise direkt nach der ersten Winkelgeschwindigkeit, so dass die zweite Winkelsensorposition bei der Erfassung der ersten Winkelgeschwindigkeit beim Ermitteln der zweiten Winkelgeschwindigkeit wieder verwendet wird. Zur Ermittlung der zweiten Winkelgeschwindigkeit wird das Erreichen einer dritten Winkelsensorposition erfasst, wobei hier wiederum die jeweiligen Zeitpunkte erfasst werden aus der sich dadurch ergebenden Zeitdauer und der Winkeldifferenz zwischen zweiter und dritter Winkelposition das Verhältnis zwischen Winkeldifferenz und Zeitdauer gebildet werden kann.

Gemäß dem Stand der Technik würde die zweite erfasste Winkelgeschwindigkeit direkt nach deren Ermittlung zur Regelung weitergegeben werden, wobei die Regelung gemäß dieser naturgemäß sprunghaften Änderung Regelungsmaßnahmen einleitet.

Erfindungsgemäß wird jedoch die Winkelgeschwindigkeitsänderung erfasst zwischen der zweiten und der ersten Winkelgeschwindigkeit, d. h. es wird die Differenz gebildet von: zweite Winkelgeschwindigkeit minus erste Winkelgeschwindigkeit. Der Geschwindigkeitszuwachs, d. h. die Winkelgeschwindigkeitsänderung entspricht der Beschleunigung. Wie bereits bemerkt kann die Beschleunigung durch eine tatsächliche Geschwindigkeitserhöhung (oder - verringerung) der Welle auftreten, oder auch durch einen Genauigkeitsfehler des Geberrads. Daher wird erfindungsgemäß nicht die zweite Winkelgeschwindigkeit unmittelbar abgegeben, beispielsweise an eine Regelung, sondern die Ausgabe-Winkelgeschwindigkeit, die der dritten Winkelposition entspricht, wird mit einer künstlich verringerten Winkelgeschwindigkeitsänderung abgegeben, d. h. als erste Ausgabe-Winkelgeschwindigkeit (Winkelgeschwindigkeit, die für das vorangegangene Intervall bzw. für das Ende des vorangegangenen Intervalls ausgeben wurde), die addiert mit nur einem Anteil der mittels erster und zweiter Winkelgeschwindigkeit ermittelten Winkelgeschwindigkeitsänderung (und nicht der vollständigen Winkelgeschwindigkeitsänderung), so dass die sich ergebende Ausgabe-Winkelgeschwindigkeit nicht der vollständigen zweiten Winkelgeschwindigkeit entspricht, sondern nur der zuvor ausgegebenen Winkelgeschwindigkeit inklusive einem abgeschwächten Anteil der Winkelgeschwindigkeitsänderung. Besonders bevorzugt ist ein Anteil der Winkelgeschwindigkeitsänderung zum Zeitpunkt der dritten Winkelposition von Null so dass zum Zeitpunkt der dritten Winkelposition die zuvor ausgegebene Winkelgeschwindigkeit und nicht die zweite Winkelgeschwindigkeit oder die zuvor ausgegebene Winkelgeschwindigkeit inklusive der vollen Winkelgeschwindigkeitsänderung ausgegeben wird. Mit anderen Worten wird zwar die zweite Winkelgeschwindigkeit erfasst, jedoch als eine Ausgabe-Winkelgeschwindigkeit ausgegeben, die mit der zuvor ausgegebenen Winkelgeschwindigkeit (=Ausgabe-Winkelgeschwindigkeit des vorangehenden Intervalls) beginnt und ausgehend hiervon vorzugsweise linear zunehmend den Anteil der Winkelgeschwindigkeitsänderung berücksichtigt, indem der Anteil der Winkelgeschwindigkeitsänderung kontinuierlich von Null ausgehend erhöht wird. Vorzugsweise wird der Anteil der Winkelgeschwindigkeitsänderung für ein darauf folgendes Winkelintervall nie vollständig, sondern nur zu einem Anteil < 1 zur Addition mit der ersten Winkelgeschwindigkeit verwendet. Der Anteil bezogen auf das Ende des Winkelintervalls bzw. die Steigung des Anteils im Falle eines linearen Verlaufs gemäß der Winkelgeschwindigkeitsänderung wird vorzugsweise so gewählt, dass zum Ende des Winkelintervalls die Winkelgeschwindigkeitsänderung nicht vollständig berücksichtigt wird, so dass gegen Ende des Winkelintervalls ein Winkelgeschwindigkeitswert vorgesehen wird, der zwischen der ersten und der zweiten Winkelgeschwindigkeit liegt. Das Winkelintervall, welches mit der dritten Winkelposition beginnt, (und somit den Beginn der Ausgabe der zweiten Winkelgeschwindigkeit darstellt) endet mit dem Erfassungsintervall, das zur Erfassung einer dritten Winkelgeschwindigkeit nach Erfassung der zweiten Winkelgeschwindigkeit endet oder an einem Zeitpunkt, der aufgrund der ersten, zweiten und dritten Winkelposition sowie den zugehörigen Zeitdauern als Ende des darauf folgenden Winkelgeschwindigkeitserfassungsintervalls extrapoliert wurde.

Erfindungsgemäß wird somit die Winkelgeschwindigkeit zwischen einer ersten und zweiten Winkelposition, d. h. innerhalb eines ersten Winkelintervalls ermittelt, sowie eine zweite Winkelgeschwindigkeit für das darauf folgende Winkelintervall zwischen der zweiten und einer dritten Winkelposition. Die sich ergebende Differenz zwischen den beiden Winkelgeschwindigkeiten, d. h. die Winkelgeschwindigkeitsänderung, wird für das zweite Winkelintervall ausgehend von der zuvor ausgegebenen Winkelgeschwindigkeit (oder, bei starken zuvor auftretenden normierten oder nicht normierten Winkelgeschwindigkeitsänderungen, ausgehend von der zuvor erfassten ersten Winkelgeschwindigkeit) mit einem (von Null oder geringen Wert ausgehenden) zunehmenden Anteil der Winkelgeschwindigkeitsdifferenz ausgegeben, wobei der Anteil kontinuierlich oder vorzugsweise linear ansteigt und beispielsweise eine Steigung aufweist, bei der der Anteil zu Beginn eines darauf folgenden Winkelintervalls (auf das zweite Winkelintervall folgend) oder am Ende des aktuellen Winkelintervalls < 1 ist, beispielsweise 0,1, 0,2, 03, 0,5 oder 0,7. Anstatt eines linearen Anstiegs können beliebige Verläufe des Anteils für das dritte Winkelintervall gewählt werden, beispielsweise eine proportionaler Anstieg mit einer zu addierenden Konstanten (die den Anteil für den Beginn des Winkelintervalls festlegt), ein treppenförmiger Anstieg mit mehreren Stufen, ein Verlauf, der sich durch die Integration des Betrags der Winkelgeschwindigkeitsdifferenz ergibt, oder ähnliches. Ist jedoch gewährleistet, dass der steigende Anteil der Winkelgeschwindigkeitsänderung innerhalb des gesamten Winkelintervalls < 1 ist und somit die anteilige Winkelgeschwindigkeitsänderung kleiner als die Winkelgeschwindigkeitsänderung selbst ist, dann tragen Ungenauigkeiten im Geberrad nur in verringertem Maße bei der Bestimmung der Winkelgeschwindigkeit bei.

Alternativ kann der Anteil auch nur für einen Winkelintervallabschnitt < 1 sein, wobei der Winkelintervallabschnitt mit dem Winkelintervall beginnt, jedoch vor dem Winkelintervall endet. Anstatt eines ersten Anteilswerts und einer dazugehörigen Steigung, wobei der erste Anteilswert sich auf den Beginn des Winkelintervalls bezieht, kann darüber hinaus ein zweiter Anteilswert definiert werden, auf den der erste Anteilswert monoton oder streng monoton steigend erhöht wird, wobei der zweite Anteilswert am Ende des Winkelintervalls erreicht wird oder am Ende des Winkelintervallabschnitts. Wie bereits bemerkt liegt der erste Anteilswert vorzugsweise bei Null, wohingegen der zweite Anteilswert beispielsweise bei 30 % oder 40 % liegt, größer als der erste Anteilswert ist und (wie auch der erste Anteilswert) < 1 ist. Der Anteilswert entspricht der Gewichtung, mit der die Winkelgeschwindigkeitsänderung in die ausgegebene Winkelgeschwindigkeit eingeht.

Der Anteil selbst kann vordefiniert sein oder richtet sich nach dem Betrag der Winkelgeschwindigkeitsänderung, um zu gewährleisten, dass große Winkelgeschwindigkeitsänderungen, die naturgemäß nicht (nur) von Ungenauigkeiten des Geberrades herrühren, entsprechend in die ausgegebene Winkelgeschwindigkeit einfließen. Ferner kann das oben beschriebene Verfahren zur Verringerung des Einflusses der Winkelgeschwindigkeitsänderung auch ausgesetzt werden, um eine dynamische Reaktion auf tatsächlich ablaufende Beschleunigungsvorgänge durch die Regelung für (auf die Drehzahl normierte) Winkelgeschwindigkeitsänderungen, die über einem Schwellwert liegen, zu ermöglichen. Demgemäß kann beispielsweise der Absolutwert der Geschwindigkeitsänderung mit einem Schwellwert verglichen werden, wobei bei einer Winkelgeschwindigkeitsänderung kleiner dem Schwellwert nur ein Anteil der Winkelgeschwindigkeitsänderung gegebenenfalls mit entsprechendem Verlauf in die ausgegebene Winkelgeschwindigkeit einfließt, wohingegen bei Überschreiten des Schwellwerts der nur anteilige Einfluss aufgehoben wird und stattdessen unmittelbar (d. h. ohne "weichen Verlauf") die volle Winkelgeschwindigkeitsänderung sofort (d.h. sprunghaft) in die ausgegebene Winkelgeschwindigkeit einbezogen wird. Mt anderen Worten wird bei Überschreiten der Winkelgeschwindigkeitsänderung anstatt der wie oben beschrieben zusammengesetzten Winkelgeschwindigkeit (d. h. erste Winkelgeschwindigkeit plus Anteil der Änderung) direkt die zweite Winkelgeschwindigkeit ausgegeben, d. h. unmittelbar nach deren Berechnung durch Teilen des gerade überstrichenen Winkelintervalls durch die zugehörige Zeitdauer. Alternativ kann das Winkelsignal ausgegeben werden als gewichtete Summe der tatsächlich berechneten Winkelgeschwindigkeit (zweite Winkelgeschwindigkeit) und der Winkelgeschwindigkeit, deren Dynamik wie oben beschrieben als ausgegebene Winkelgeschwindigkeit abgeschwächt wurde, indem nur ein Anteil der Geschwindigkeitsänderung übertragen wurde. Die Gewichtung bestimmt sich vorzugsweise nach dem Betrag der (auf die Drehzahl normierten oder unnormierten) Winkelgeschwindigkeitsänderung, so dass die Gewichtung der zweiten ursprünglichen Winkelgeschwindigkeit mit dem Betrag der Winkelgeschwindigkeitsänderung zunimmt, und die Gewichtung der zusammengesetzten Winkelgeschwindigkeit, d. h. der Winkelgeschwindigkeit mit nur anteilig berücksichtigter Winkelgeschwindigkeitsänderung mit dem Betrag der Winkelgeschwindigkeitsänderung abnimmt. Zur Berechnung der Gewichtung kann ein lineares Modell in der Form von y = c0 + x * c1 verwendet werden, wobei y die Gewichtung der tatsächlichen, zweiten Winkelgeschwindigkeitsänderung ist, y den Betrag der Winkelgeschwindigkeitsänderung darstellt, und c0 bzw. c1 Konstanten sind. Zur Berechnung der Gewichtung der Winkelgeschwindigkeit mit abgeschwächter Dynamik kann ein Modell verwendet werden, demgemäß die beiden Gewichtungen (y) konstant sind.

Im Allgemeinen kann ferner zur Verringerung von unnötigen Regelmaßnahmen der Verlauf des Anteils möglichst "glatt" bzw. kontinuierlich vorgesehen werden, in dem ein Verlauf verwendet wird, dessen zeitliche Ableitung für das gesamte Winkelintervall unter einem vorbestimmten Schwellwert liegt und dessen zeitliche Ableitung zu Beginn oder am Ende des Winkelintervallabschnitts vorzugsweise 0 ist, beispielsweise eine (angenäherte) Arcustangensfunktion oder eine (angenäherte) in Richtung der y-Achse verschobene Kosinusfunktion (raised cosine) für 0 .. Pi. Dies ermöglicht eine besonders weiche Abfederung von Winkelgeschwindigkeitsänderungen, die auf Ungenauigkeiten des Geberrads zurückgehen. Der Verlauf des Anteils kann mittels Software, Hardware oder einer Kombination hiervon errichtet werden und ist vorzugsweise als eine Look-Up-Tabelle (Anteil gegenüber Winkelversatz innerhalb des Winkelintervalls) gegeben. Neben dem Parameter des Winkelversatzes innerhalb des Winkelintervalls und dem zugehörigen Anteil kann die Look-Up-Tabelle ferner den Parameter des Betrags der Winkelgeschwindigkeitsänderung umfassen, um den Verlauf an den Betrag der Winkelgeschwindigkeitsänderung anzupassen. So kann beispielsweise bei einem hohen Betrag der Winkelgeschwindigkeitsänderung ein Eintrag verwendet werden, der einem schnellen Ansteigen des Anteils auf einen hohen Anteilswert entspricht, wobei bei einem geringen Betrag der Winkelgeschwindigkeitsänderung ein Verlauf ausgewählt werden kann, demgemäß der Anteil nur schwach mit dem Winkelversatz ansteigt und somit bei einem niedrigeren Anteil endet. Damit werden Winkelgeschwindigkeitsänderungen, die nur marginal sind, stärker unterdrückt als Winkelgeschwindigkeitsänderungen, die einen höheren Betrag aufweisen und die eine stärkere Auswirkung auf die Regelung (bzw. auf die ausgegebene Winkelgeschwindigkeit) erfordern. Grundsätzlich kann eine Berechnung bzw. die Verwendung der Look-Up-Tabelle mit einem Interpolationsalgorithmus verbunden werden, so dass nur eine geringe Anzahl von Werten innerhalb der Look-Up-Tabelle für eine Vielzahl von Eingangswerten verwendet werden kann.

In einer besonders einfachen Ausführungsform wird die Ausgabe-Winkelgeschwindigkeit durch einen Zähler gemäß Winkelgeschwindigkeitsänderung erhöht oder verringert. Das Zählerinkrement entspricht der (ganzzahlig gerundeten) Winkelgeschwindigkeitsänderung, d.h. der Differenz der Zählerwerte, die sich bei der Zeiterfassung im ersten Winkelintervall und im zweiten Winkelintervall ergeben haben. Vorzugsweise wird das Zählerinkrement gebildet durch die Differenz der Zählerwerte geteilt durch einen (festen) Anteilsfaktor, wodurch die abgeschwächte Steigung definiert wird, und/oder geteilt durch eine erfasste Momentandrehzahl (oder einem dazu proportionalen Wert), wodurch eine Normierung auf eine Normdrehzahl erreicht wird, um zu verhindern, dass Winkelgeschwindigkeitsänderungen bei hohen Drehzahlen sich stärker auf die Ausgabe-Winkelgeschwindigkeit als Winkelgeschwindigkeitsänderungen bei niedrigen Drehzahlen. Ferner kann vor der Berechnung die Winkelgeschwindigkeit (normiert oder nicht normiert) mit einem Schwellwert verglichen werden, ab dem die Ausgabe-Winkelgeschwindigkeit der gemessenen (zweiten) Winkelgeschwindigkeit entspricht, und unter dem Ausgabe-Winkelgeschwindigkeit wie oben beschrieben bei jedem Messintervall um einen zunehmenden Anteil der Winkelgeschwindigkeitsänderung kontinuierlich nach oben oder untern korrigiert wird.

Vorzugsweise liegen sämtliche Winkelintervalle nacheinander, wobei das erste Winkelintervall zwischen einer ersten und zweiten Winkelposition liegt, das zweite Winkelintervall zwischen der zweiten und einer dritten Winkelposition liegt und ein darauf folgendes drittes Winkelintervall zwischen der dritten und einer vierten Winkelsensorposition liegt, die direkt darauf folgt. Erfindungsgemäß verschiebt sich nach dem erfindungsgemäßen Ausgeben der Winkelgeschwindigkeit die Zuordnung zu den jeweiligen Winkelintervallen, so dass grundsätzlich aus einem (N)-ten Intervall und der zugehörigen Zeitdauer und einem (N+1)-ten Intervall und der zugehörigen Zeitdauer die Winkelgeschwindigkeitsänderung berechnet werden kann, die erfindungsgemäß nur anteilsmäßig und anfangs mit einem Anteil von vorzugsweise 0 bei der Ausgabe der Winkelgeschwindigkeit berücksichtigt wird. Im darauf folgenden Winkelintervall (N+2) wird die Winkelgeschwindigkeitsänderung berechnet durch Abziehen der Winkelgeschwindigkeit, die für das (N+1)-ten Intervall berechnet wurde, abzüglich der Winkelgeschwindigkeit, die für das (N+2)-ten Winkelintervall berechnet wurde. Erfindungsgemäß wird dann für das darauf folgende (N+3)-ten Winkelintervall nicht die Winkelgeschwindigkeit des (N+2)-ten Intervall sondern eine Winkelgeschwindigkeit ausgegeben, die von der Ausgabe des (N+1)-ten Intervall (und der zugehörigen Winkelgeschwindigkeit) ausgeht und gemäß einem ansteigenden Anteil der Winkelgeschwindigkeitsänderung gegenüber dem N+2-ten Intervall veränderlich ist.

Erfindungsgemäß werden Winkelgeber verwendet, die eine Mehrzahl digitaler Sensoren umfassen, wobei jeder digitaler Sensor nur zwei Pegel abgeben kann (d.h. Pegel 1: Markierung liegt am Sensor vor, Pegel 2: Markierung liegt nicht vor). Diese Sensoren werden vorzugsweise um einen Winkel versetzt, der 360°/k entspricht, wobei k die Anzahl der Sensoren ist. In einer besonders bevorzugten Ausführungsform werden 3 digitale Sensoren verwendet, die jeweils um 120° zueinander versetzt sind, wobei das Geberrad Zähne aufweist, diese genauso breit wie die Lücken sind, die sich mit den Zähnen um den Umfang herum abwechseln. Das von den Sensoren erzeugte binäre Signal beschreibt mit der Position der Flanke die Stelle, an der eine Lücke in einen Zahn übergeht oder umgekehrt, abhängig von der Flankenrichtung. Um den Flankenzeitpunkt zuzuordnen, wird vorzugsweise ein Zeitnormal verwendet, beispielsweise ein Timer oder ein Zähler (=Zeitnormal), der durchgehend zählt und dessen Zählerwert periodisch mit einer konstanten Frequenz bzw. mit einem konstanten Takt um den gleichen Betrag erhöht wird. Der Zähler kann periodisch zurückgesetzt werden, beispielsweise jedes Mal beim Erreichen einer bestimmten Winkelposition (beispielsweise 0°). Steigt oder fällt eine Flanke eines der Sensoren des Winkelgebers, dann wird der zugehörige Zählerwert erfasst und zwischengespeichert. Aus der Differenz der Zählerwerte lassen sich unmittelbar auf Grund der Zählerfrequenz bzw. des Zählertakts der zugehörige Zeitpunkt bzw. daraus folgend die zugehörige Zeitdauer berechnen.

Grundsätzlich kann die Winkelmarkierung beispielsweise optisch oder magnetisch sein, wobei der Sensor in diesem Fall ein optischer oder magnetischer Sensor ist. Das Signalmerkmal, welches den Zeitpunkt der Zeiterfassung festlegt, kann vorzugsweise ein Durchgang bei einem bestimmten Schwellwert sein, beispielsweise bei einem Nulldurchgang.

Neben einer Anwendung innerhalb eines Winkelmessverfahrens oder Winkelermittlungsverfahrens kann die erfindungsgemäße Abdämpfung von durch zeitdiskrete Winkelerfassung erzeugten Winkelgeschwindigkeitssprüngen realisiert werden in einem Verfahren zum Regeln der Winkelgeschwindigkeit eines Motors, vorzugsweise eines Elektromotors, beispielsweise eine Gleichstrommaschine, die als Fahrzeugantrieb dient. Gemäß einer ersten Alternative kann der Regelungsvorgang selbst unmodifiziert bleiben, wobei jedoch die Eingabegröße, d.h. der Messschritt des Istwerts des Regelungsvorgangs, bereits erfindungsgemäß modifiziert ist. Der sonst übliche Regelungsmechanismus geht somit von einer Winkelgeschwindigkeit aus, deren Verlauf bereits erfindungsgemäß von (kleinen) Winkelgeschwindigkeitssprüngen durch Dämpfung befreit wurde. Gemäß einer zweiten Alternative wird der Regelkreis mit den tatsächlich erfassten Winkelgeschwindigkeiten oder den Winkelsensorsignalen gespeist, wobei der Ist/Sollvergleich des Regelkreises erfindungsgemäß modifiziert ist. Gemäß dieser Modifizierung wird im Rahmen des Vergleichs mit einem Sollwert, um den Regelfehler zu erfassen und entsprechend die Steuerung zu korrigieren, der Istwert gemäß dem erfindungsgemäßen Verfahren bearbeitet. Durch diese Bearbeitung werden (kleine) Winkelgeschwindigkeitsänderungen nicht vollständig nachvollzogen, sondern wie dargestellt abgedämpft. Im letzteren Fall kann der Winkelsensor selbst bzw. Zuführung gegenüber dem Stand der Technik unverändert bleiben, wohingegen die erfindungsgemäße Abdämpfung innerhalb des Regelungsmechanismus vorgesehen wird. Gemäß der ersten Alternative wird jedoch das zugeführte Winkelgebersignal modifiziert, so dass den Regelalgorithmus bereits "gedämpfte" Signale erreichen, die erfindungsgemäß von (kleineren) Winkelgeschwindigkeitssprüngen befreit wurden. Die Linearisierung von Sprüngen findet somit entweder innerhalb des Ist/Sollvergleichs der Regelung statt, oder bereits im Rahmen der Ermittlung der Winkelgeschwindigkeit.

Das der Erfindung zu Grunde liegende Konzept kann ferner realisiert werden mittels einer Erfassungsvorrichtung, die an einen Winkelgeber anschließbar ist, und von diesem die tatsächlich erfassten Winkelsignale zu erfassen. Die Erfassungsvorrichtung umfasst ferner Rechnungsvorrichtungen sowie ein Zeitnormal, um das erfindungsgemäße Verfahren durchzuführen, d.h. um Winkelgeschwindigkeitssprünge, die sich auf Grund von zeitdiskreten Winkelsignalen ergeben, erfindungsgemäß zu glätten und Winkelsprünge mit einem zeitlich steigendem Anteil zu gewichten. Die Erfassungsvorrichtung umfasst ferner eine Ausgabe, die ein erfindungsgemäß geglättetes Signal ausgibt, das dem Ausgabe-Winkelgeschwindigkeitswert entspricht. Eine derartige Erfassungsvorrichtung kann beispielsweise zwischen einem Winkelgeber gemäß dem Stand der Technik und einer Regelvorrichtung gemäß dem Stand der Technik zwischengeschaltet werden, wobei dies eine modulare Realisierungweise erlaubt und sowohl Winkelgeber als auch Regelkreis unverändert bleiben können. Die erfindungsgemäße Modifikation findet somit in einem zwischenschaltbaren Modul statt. Das Modul selbst kann gemäß einer ersten Ausführungsform aus einzelnen Winkelgebersignalen die erfindungsgemäß modifizierte Ausgabe-Winkelgeschwindigkeit erzeugen, wobei hierzu die Erfassungsvorrichtung vor Verarbeitungseinheiten umfasst, mit denen die Winkelgebersignale in Winkelgeschwindigkeiten umgesetzt werden können. Gemäß einer zweiten Ausführung umfasst die Vorrichtung bereits Eingänge zur Erfassung (vorab berechneter) Winkelgeschwindigkeitswerte, so dass die Vorrichtung lediglich die erfindungsgemäße Winkelgeschwindigkeitsänderung berechnen muss, und diese in entsprechende Werte mit ansteigendem Änderungsanteil umzusetzen. Je nach Art der verwendeten Winkelgeber (d.h. mit oder ohne Vorverarbeitung) kann die eine oder andere Vorrichtung zwischen Winkelgeber und Regelkreis zwischengeschaltet werden.

Grundsätzlich kann als Ausgabe-Geschwindigkeitswert, der als Grundlage für einen folgenden Ausgabe-Geschwindigkeitswert dient, eine tatsächlich erfasste Winkelgeschwindigkeit verwendet werden, eine über die Zeit gemittelte Winkelgeschwindigkeit oder einen Anfangwert, insbesondere beim Starten des Motors. Ferner kann vorgesehen sein, den (vorausgehenden) Ausgabe-Geschwindigkeitswert regelmäßig oder periodisch auf die momentan erfasste Winkelgeschwindigkeit zu setzen, um ein Abdriften zu verhindern. Ferner kann als (vorausgehender) Ausgabe-Geschwindigkeitswert eine zeitliche Mittelung von mehreren vorausgehenden Ausgabe-Geschwindigkeitswerten verwendet werden.

Zusammengefasst betrifft die Erfindung ein Verfahren und eine Vorrichtung zur Winkelgeschwindigkeitserfassung mittels eines digitalen Winkelgebers, beispielsweise zur Elektromotorsteuerung. Anstatt zeitdiskrete Änderungen unmittelbar in Form von Sprüngen im Ausgabesignal zu berücksichtigen, wird die erfasste Winkelgeschwindigkeitsänderung nur mit einem (zunehmenden) Anteil bei der Ausgabe berücksichtigt. Dies erlaubt einen glätteren Verlaufbei nicht vollständig präzisen Geberrädern, deren Ungenauigkeiten ansonsten zu unnötigen Reaktionen durch die Regelung führen. Starke Winkelgeschwindigkeitsänderungen werden hingegen unmittelbar weitergegeben, um damit einhergehende Beschleunigungen unverfälscht bei der Regelung zu berücksichtigen.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: einen beispielhaften Kurvenverlauf der Ausgabe-Winkelgeschwindigkeit gemäß der Erfindung, die einem entsprechenden Kurvenverlauf nach dem Stand der Technik gegenübergestellt ist; und
- Figuren 2a-2d: erfindungsgemäße Kurvenverläufe, die jeweiligen Kurvengeläufen gemäß dem Stand der Technik gegenübergestellt sind.

### Ausführungsformen der Erfindung

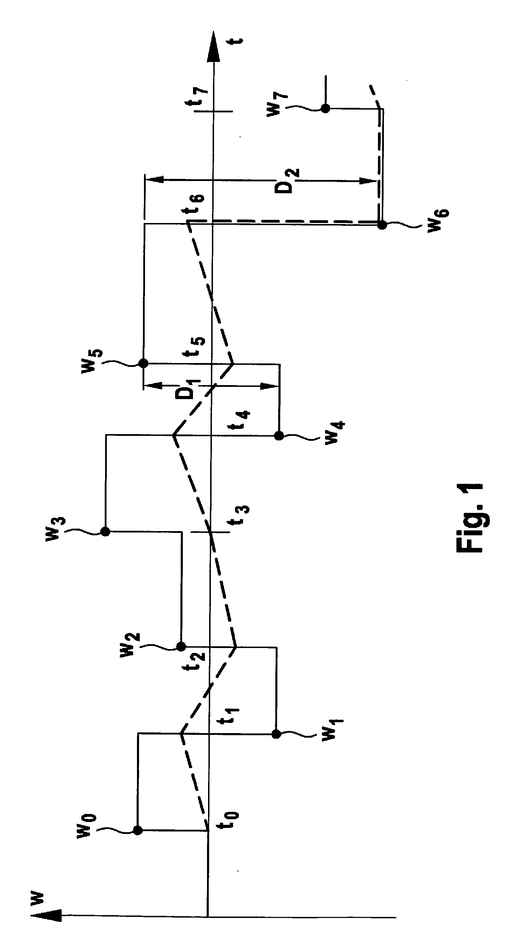

In der Figur 1 ist ein beispielhafter Kurvenverlauf einer erfassten Winkelgeschwindigkeit mit durchgezogener Linie gemäß dem Stand der Technik dargestellt, dem ein entsprechender Winkelgeschwindigkeitsverlauf mit gestrichelter Linie gegenübergestellt ist, der sich bei Anwendung der Erfindung ergibt. In der Figur 1 ist die Winkelgeschwindigkeit W gegenüber der Zeit t aufgetragen. Es gilt W = dw/dt, wobei w die Winkelposition darstellt.

Zum Zeitpunkt t₀ wird eine erste Winkelgeschwindigkeit festgestellt, wo, so dass dem Stand der Technik (durchgezogene Linie) die Ausgabe-Winkelgeschwindigkeit sofort auf den Wert w₀ ansteigt. Zum Zeitpunkt t₁ wird eine zweite Winkelgeschwindigkeit w₁ erfasst, wobei diese ebenso gemäß dem Stand der Technik sofort und vollständig in die Ausgabe-Winkelgeschwindigkeit eingeht. Die durchgezogene Linie stellt somit die jeweils aktuell festgestellte Winkelgeschwindigkeit dar, bis diese durch eine weitere, aktuellere Winkelgeschwindigkeit abgelöst wird. Wird jedoch gemäß der Erfindung beim Zeitpunkt t₁ eine Änderung der Winkelgeschwindigkeit von w₀ erfasst, so wird die Änderung nicht unmittelbar und vollständig weitergegeben, sondern als Verlauf, der zu einem vorangehenden Ausgabe-Winkelgeschwindigkeitswert hinzuaddiert wird, und der in zunehmenden Maße einen Anteil der Winkelgeschwindigkeitsdifferenz zwischen der Amplitude von w₀ und w₁ aufweist. In Figur 1 steigt der Anteil der Winkeldifferenz linear, wobei der Anteil jedoch bei t₁ gleich 0 ist und bei t₂ (kurz vor der Erfassung eines aktuelleren Geschwindigkeitswerts) maximal ist, jedoch unter 1. Damit verfolgt die in Figur 1 gestrichelt dargestellte Ausgabe-Winkelgeschwindigkeit zwar den Verlauf der erfassten Winkelgeschwindigkeit, jedoch nicht vollständig und in linear zunehmendem Maße.

Zum Zeitpunkt t₀ wird von einem anfänglichen Initial-Ausgabewinkelgeschwindigkeitswert ausgegangen, beispielsweise einer ersten (oder nullten, d.h. vorab gemessenen) Winkelgeschwindigkeit. Zum Zeitpunkt t₀ wird jedoch eine aktuellere, zweite Winkelgeschwindigkeit w₀ erfasst, wodurch die erfindungsgemäße Ausgabe-Winkelgeschwindigkeit ab dem Zeitpunkt t₀ gemäß dieser Änderung ansteigt, jedoch nur anteilig. Mit anderen Worten reflektiert der Anstieg zwischen t₀ und t₁ die Geschwindigkeitszunahme, wie sie durch die Flanke bei t₀ dargestellt ist, wobei jedoch die Winkelgeschwindigkeitsänderung, wie sie durch w₀ gekennzeichnet ist, zu Beginn des Intervalls t₀-t₁ nur vernachlässigbar in die Ausgabe-Winkelgeschwindigkeit eingeht. Vielmehr bestimmt sich die Ausgabe-Winkelgeschwindigkeit zu Beginn des Intervalls t₀-t₁ durch die Ausgabegeschwindigkeit, die zum Zeitpunkt t₀ ausgegeben wurde, wobei mit zunehmendem t ab t₀ auch der Anteil der Winkeldifferenz linear zunimmt, der sich auf die Winkeldifferenz bei w₀ bezieht. Für das zweite Zeitintervall t₁-t₂ ist in gleicher Weise für den Beginn dieses zweiten Zeitintervalls (d.h. bei t₁ bzw. kurz nach t₁) die Ausgabe-Winkelgeschwindigkeit bestimmend, die zum Zeitpunkt t₁ ausgegeben wurde, wobei ebenso in zunehmenden Maße der Verlauf der Ausgabegeschwindigkeit zwischen t₁ und t₂ durch die Winkelgeschwindigkeitsänderung bestimmt wird, die sich durch die Differenz zwischen w₁ und w₀ ergibt. Die bei t₁ abfallende Flanke der tatsächlich gemessenen Winkelgeschwindigkeit wird somit auf das gesamte Intervall t₁-t₂ entzerrt, indem die Winkelgeschwindigkeitsänderung zunächst nicht in die Ausgabe-Winkelgeschwindigkeit einfließt, und dann mit zunehmendem Zeitverlauf mit linear zunehmenden Anteil zu der Ausgabe-Winkelgeschwindigkeit bei t₁ hinzuaddiert wird. Es ist zu erkennen, dass beim Zeitpunkt t₂ der Anteil der Winkelgeschwindigkeitsänderung deutlich kleiner als 1 ist, da der Amplitudenunterschied zwischen w₁ und w₀ nur zu einem Anteil zu der Ausgabe-Winkelgeschwindigkeit bei t₁ hinzuaddiert wurde, wobei der Anteilsfaktor in Figur 1 bei ungefähr 40 % liegt. Mit anderen Worten entspricht der Amplitudenunterschied zwischen der Ausgabe-Winkelgeschwindigkeit bei t₁ und der Ausgabe-Winkelgeschwindigkeit bei t₂ 40 % des Amplitudenunterschieds, der als Flanke bei t₁ wiedergegeben ist, d.h. w₁ - w₀. Mit anderen Worten entspricht die Ausgabe-Winkelgeschwindigkeit am Ende des jeweiligen Intervalls 40 % der erfassten Winkelgeschwindigkeitsänderung und innerhalb dieses Intervalls 0-40 %, wobei dieser Anteil linear von der Zeit abhängt, wenn der Beginn des Intervalls als Zeitnullpunkt gewählt wird. Wie bereits bemerkt kann der Anteilsverlauf und insbesondere der maximal zu erreichende Anteil abhängig von der erfassten Winkelgeschwindigkeitsänderung sein.

Die Winkelgeschwindigkeitsänderung zwischen t₄ und t₅ (vergleiche Flanke bei ts mit der Winkelgeschwindigkeitsänderung von w₅ minus w₄) führt zu einem Anstieg der Ausgabe-Winkelgeschwindigkeit von einem Wert bei t₅ (der der Ausgabe-Winkelgeschwindigkeit am Ende des vorhergehenden Intervalls entspricht), der auf einen Wert bei t₆ dadurch ansteigt, dass die Flanke von w₄ zu w₅ in zunehmenden Maße zu der Ausgabe-Winkelgeschwindigkeit am Ende des Intervalls t₄-t₅ hinzuaddiert wird. Das Zeitintervall t₅-t₆ reflektiert somit im zunehmenden Maße die mit D₁ angegebene Winkelgeschwindigkeitsänderung zwischen w₄ und w₅.

Zum Zeitpunkt t₆ wird jedoch eine weitere Winkelgeschwindigkeit erfasst, die zu einer Winkelgeschwindigkeitsänderung D₂ (= w₆ - w₅) führt. Gemäß einer besonderen Ausführung der Erfindung werden sämtliche erfassten Winkelgeschwindigkeitsänderungen, vorzugsweise vor Erstellung der Ausgabe-Winkelgeschwindigkeit, hinsichtlich ihres Betrags mit einem Schwellwert verglichen, wobei ab einem bestimmten Schwellwert nicht eine vorhergehende Ausgabe-Winkelgeschwindigkeit und ein zunehmender Anteil einer Winkelgeschwindigkeitsänderung zu Grunde gelegt wird, sondern die Ausgabe-Winkelgeschwindigkeit unmittelbar (oder nur geringfügig verzögert) der zweiten erfassten Winkelgeschwindigkeit gleichgesetzt wird.

Unter der Annahme, dass zwischen t₀ und t₆ sämtliche Schwankungen der erfassten Winkelgeschwindigkeit auf Ungenauigkeiten des Geberrads zurückzuführen sind, ist es sinnvoll, dass für diese Zeitintervalle die Ausgabe-Winkelgeschwindigkeit die Winkelgeschwindigkeitsänderung nicht vollständig und nur anteilsweise wiedergibt. Tritt jedoch bei t₆ eine Winkelgeschwindigkeitsänderung auf, die auf Grund der höheren Betrags (der größer als der Änderungsbetrag vorangehender Intervalle ist und über einem Schwellwert liegt) einer tatsächlich zu berücksichtigenden Geschwindigkeitsänderung der Welle zurückzuführen ist, dann wird die Ausgabe-Winkelgeschwindigkeit der neu erfassten Winkelgeschwindigkeit gleichgesetzt, so dass ein von der Ausgabe-Winkelgeschwindigkeit ausgehender Regler diese Änderung unmittelbar und ungedämpft in Regelmechanismen umsetzen kann. Dadurch bleibt für signifikante Winkelgeschwindigkeitsänderungen eine hohe Dynamik bei der Regelung gewährleistet.

Es ist zu erkennen, dass sämtliche aufeinanderfolgende erfassten Winkelgeschwindigkeiten sich um einen Betrag unterscheiden, der im Vergleich zu dem Betrag von D₂ gering ist. Ein (knapp) unter D₂ liegender Schwellwert, d.h. ein Schwellwert, der zwischen D₂ und (w₄ minus w₃) liegt, ermöglicht somit das Beenden der erfindungsgemäßen Dämpfung von kleinen Winkelschwankungen und ermöglicht die Reaktion des Reglers auf starke Winkelgeschwindigkeitsänderungen. Für das Zeitintervall t₆ - t₇ wird somit die erfindungsgemäße Dämpfung ausgesetzt und die Ausgabe- Winkelgeschwindigkeit entspricht exakt der Differenz zwischen den zwei vorhergehend gemessenen Winkelgeschwindigkeiten. Im Vergleich zu der Winkeldifferenz zwischen w₆ und w₅ (und vor allem im Vergleich zu einem entsprechenden Schwellwert) fällt die Differenz zwischen w₇ und w₆ deutlich kleiner aus, so dass ab dem Zeitpunkt w₇ wieder in den erfindungsgemäßen "gedämpften" Reaktionsmodus übergegangen werden kann, bei dem die kurz vor w₇ herrschende Ausgabe-Winkelgeschwindigkeit (= w₆) zu Grunde gelegt wird, auf die ein von 0 ausgehender zunehmender Anteil der Winkelgeschwindigkeitsänderung w₇- w₆ hinzugefügt wird, bis ein Maximalanteil erreicht ist (der kleiner als 1 ist). Die ab w₇ vorzusehende Ausgabe-Winkelgeschwindigkeit weist somit die Dreiecksform bzw. Rampenform auf, wie es die gestrichelte Linie zwischen t₀ und t₆ darstellt. Auf Grund der Bezugnahme auf die Winkelgeschwindigkeit ist die Steigerung der Rampe vor t₆ und nach t₇ proportional zu der Winkelgeschwindigkeitsänderung, die in dem vorhergehenden Intervall erfasst wurde.

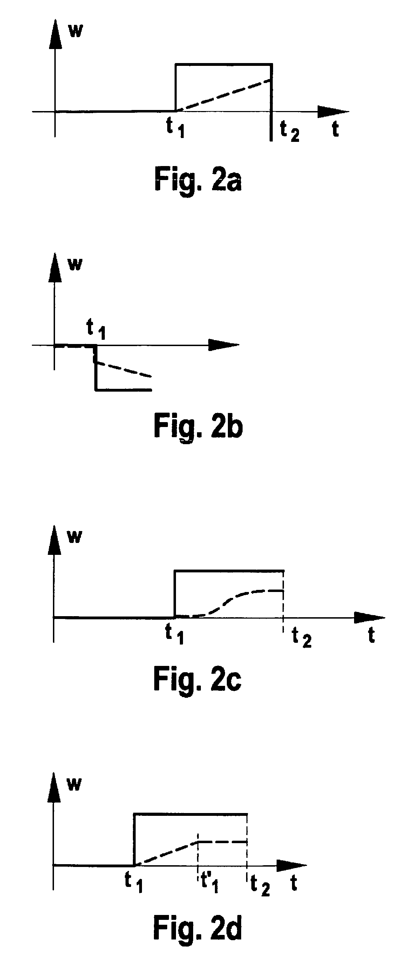

Die Figur 2a zeigt in durchgezogener Linie die erfasste und gemäß dem Stand der Technik auch ausgegebene Winkelgeschwindigkeit, wobei die tatsächlich ausgegebene erfindungsgemäße Ausgabe-Winkelgeschwindigkeit in gestrichelter Linie dargestellt ist. Es ist zu erkennen, dass die Winkeldifferenz zum Zeitpunkt t₁ zuerst mit einem Anteil von 0 und dann zunehmend bis zu einem Maximalanteil beim Zeitpunkt t₂ zu der vorhergehenden Ausgabe-Winkelgeschwindigkeit (in diesem Fall = erste Winkelgeschwindigkeit) hinzuaddiert wird.

Die Figur 2b zeigt ein Verlauf der gestrichelt dargestellten Ausgabe-Winkelgeschwindigkeit in Reaktion auf einen Anstieg bei t₁, wobei der Anteil der Winkelgeschwindigkeitsänderung bereits zum Zeitpunkt t₁ (d.h. am Anfang des Intervalls) nicht 0 ist, sondern einem ersten Anteil größer 0 und kleiner 1 entspricht. Jedoch nimmt darüber hinaus der Anteil mit zunehmender Zeit ab t₁ zu, beispielsweise linear, um die tatsächlich erfasste Winkelgeschwindigkeitsänderung präziser nachzuvollziehen. Zwar unterdrückt die in Figur 2b dargestellte unvollständige Dämpfung zum Zeitpunkt t₁ genauigkeitsbedingte Schwankungen nicht vollständig, jedoch erlaubt der in Figur 2b dargestellte Verlauf eine frühzeitige Anpassung an notwendige Regeländerungen, selbst wenn die teilweise von Genauigkeitsfehlern überschattet werden.

In der Figur 2c ist ein nicht linearer Anteilsverlauf dargestellt, der ebenso wie in Figur 2a zum Zeitpunkt t₁ gleich 0 ist, der jedoch ab diesem Zeitpunkt einen nicht-linearen, jedoch "weicheren" Verlauf darstellt, der zu einem Maximalanteil < 1 führt. Die zeitliche Ableitung des in Figur 2c dargestellten zeitlichen Verlaufs ist im Vergleich zu den in Figur 2a und 2b dargestellten Verläufen zu Beginn des mit t₁ startenden Intervalls gleich 0 und steigt streng monoton, so dass die zugehörige Reglerreaktion zu geringeren Stromspitzen bei der Regelung führt. In gleicher Weise steigt der Anteil gegen Ende des Intervalls t₁-t₂ nicht mehr, so dass die zeitliche Ableitung bei t₂ ebenso gleich 0 ist. Durch derartige weiche Übergänge kann vermieden werden, dass schlagartige Steuerungsänderungen bei einem Regler mit hoher Dynamik vorgenommen werden. Der in Figur 2c dargestellte Verlauf kann einem Arcustangens entsprechen, einem Kosinusverlauf zwischen 0 und π oder einem ähnlichen Verlauf, dessen erste Ableitung zu Beginn und am Ende gegen 0 geht.

In Figur 2d ist ein Verlauf dargestellt, bei dem der Anteil zum Zeitpunkt t₁ 0 ist, jedoch ab einem Zeitpunkt t₁' nicht mehr steigt, sondern konstant bleibt. Zwischen dem Zeitpunkt t₁ und t₁' erhöht sich der Anteil kontinuierlich, ausgehend von einem Anteil gleich 0. Ab dem Zeitpunkt t₁ bleibt der Anteil auf einem konstanten Niveau größer 0 (jedoch kleiner 1). Wie bereits bemerkt bezieht sich die in Figur 2d gestrichelt dargestellte Ausgabe-Winkelgeschwindigkeit auf den Sprung bei t₁, d.h. auf die bei t₁ festgestellte Winkelgeschwindigkeitsänderung. Im Vergleich zu den Figuren 1 und 2a-2c zeigt die Figur 2d einen zunehmenden Anteilsverlauf nur für einen ersten Intervallabschnitt, der mit dem Intervall selbst beginnt, jedoch vor dem Intervall (bei t₁') endet. Das Intervall selbst endet bei t₂.

## Patentansprüche

1. Verfahren zum Erfassen der Winkelgeschwindigkeit einer Motorwelle, umfassend:
- Erfassen eines Winkelsignals eines zeitdiskreten Winkelgebers, das Zeitpunkte wiedergibt, an denen die Winkellage der Motorwelle einer Winkelsensorposition einer Vielzahl von vorbestimmten Winkelsensorpositionen entspricht;
- Erfassen der Zeitpunkte, an denen eine erste, zweite und dritte Winkelsensorposition auftreten, die in dieser Reihenfolge nacheinander vorgesehen sind;
- Ermitteln einer ersten Winkelgeschwindigkeit durch Bestimmen des Verhältnisses zwischen der Winkeldifferenz zwischen der ersten und der zweiten Winkelsensorposition, und der Zeitdauer, die zwischen den Zeitpunkten der ersten und der zweiten Winkelsensorposition liegt; und
- Ermitteln einer zweiten Winkelgeschwindigkeit durch Bestimmen des Verhältnisses der Winkeldifferenz zwischen der zweiten und der dritten Winkelsensorposition, und der Zeitdauer, die zwischen den Zeitpunkten der zweiten und der dritten Winkelsensorposition liegt;
**gekennzeichnet durch**
- Ermitteln einer Winkelgeschwindigkeitsänderung zwischen der zweiten und der ersten Winkelgeschwindigkeit; und
- Ausgeben einer Ausgabe-Winkelgeschwindigkeit, die der dritten Winkelposition zugeordnet ist, als Summe aus einer Ausgabe-Winkelgeschwindigkeit, die der zweiten Winkelposition zugeordnet ist, und einem Anteil der Winkelgeschwindigkeitsänderung, der kleiner als die Winkelgeschwindigkeitsänderung ist.

2. Verfahren nach Anspruch 1, wobei der Anteil der Winkelgeschwindigkeitsänderung für die Ausgabe-Winkelgeschwindigkeit, welche der dritten Winkelposition zugeordnet ist, proportional zu einer Differenz zwischen Winkelgeschwindigkeitsänderung und einem vorbestimmten Schwellwert ist, null für Winkelgeschwindigkeitsänderung nicht größer als ein vorbestimmter Schwellwerts ist und einem vorbestimmten Anteilswert von eins oder kleiner als eins entspricht für Winkelgeschwindigkeitsänderungen, die über einem vorbestimmten Schwellwert liegen, oder unabhängig von dem Betrag der Winkelgeschwindigkeitsänderung gleich null ist.

3. Verfahren nach Anspruch 1, wobei die Ausgabe-Winkelgeschwindigkeit für ein Winkelintervall vorgesehen wird, das mit der dritten Winkelposition beginnt und während dem zumindest für einen mit der dritten Winkelposition beginnenden Winkelintervallabschnitt die Ausgabe-Winkelgeschwindigkeit als Summe aus der Ausgabe-Winkelgeschwindigkeit, die der zweiten Winkelposition zugeordnet ist, und einem steigenden Anteil der Winkelgeschwindigkeitsänderung vorgesehen wird, der innerhalb des gesamten Winkelintervalls oder Winkelintervallabschnitts kleiner als die Winkelgeschwindigkeitsänderung ist.

4. Verfahren nach Anspruch 3, wobei während des Winkelintervallabschnitts der Anteil der Winkelgeschwindigkeitsänderung ausgehend von einem ersten Anteilswert monoton oder streng monoton steigend auf einen zweiten Anteilswert erhöht wird, der größer als der erste Anteilswert ist, und der kleiner als eins ist.

5. Verfahren nach Anspruch 3, wobei der Anteil während des Winkelintervallabschnitts gemäß einem vorbestimmten Verlauf erhöht wird; linear auf einen konstanten oder vom Betrag der Winkelgeschwindigkeitsänderung abhängigen Anteil der Winkelgeschwindigkeitsänderung kleiner als eins ansteigt; gemäß einem Verlauf ansteigt, dessen zeitliche Ableitung für den gesamten Winkelintervallabschnitt unter einem vorbestimmten Schwellwert liegt, dessen zeitliche Ableitung zu Beginn oder am Ende des Winkelintervallabschnitts null ist und während des Winkelintervallabschnitts streng monoton ansteigt, der am Ende des Winkelintervallabschnitts eins ist, oder der eine Kombination dieser Verlaufsmerkmale aufweist.

6. Verfahren nach Anspruch 3, wobei der Winkelintervallabschnitt oder das Winkelintervall ein Ende aufweist, das einer vierten Winkelsensorposition der Vielzahl von Winkelsensorpositionen entspricht, die nach der dritten Winkelsensorposition liegt.

7. Verfahren nach einem der vorangehenden Ansprüche, wobei die Winkelsensorpositionen der Vielzahl von Winkelpositionen direkt aufeinanderfolgenden Winkelpositionen entsprechen, die sich durch gleichmäßige Aufteilung eines gesamten Umlaufs durch eine ganze Zahl N ergeben.

8. Verfahren zum Regeln einer Winkelgeschwindigkeit der Motorwelle eines Motors, wobei die Winkelgeschwindigkeit gemäß dem Verfahren nach einem der vorangehenden Ansprüche erfasst wird, und der Motor gemäß einer Soll-Winkelgeschwindigkeit und der als eine Eingangsgröße vorgesehenen Ausgabe-Winkelgeschwindigkeit geregelt wird, oder die Winkelgeschwindigkeit gemäß den Schritten des Erfassens des Winkelsignals, des Erfassens der Zeitpunkte und des Ermittelns der ersten und zweiten Winkelgeschwindigkeit gemäß dem Verfahren nach einem der vorangehenden Ansprüche erfaßt wird, und ein Schritt des Soll/Ist-Vergleichs, der als Teil des Regelschritts durchgeführt wird, das Ermitteln einer Winkelgeschwindigkeitsänderung sowie das Ausgeben der Ausgabe-Winkelgeschwindigkeit als eine Ist-Winkelgeschwindigkeit gemäß dem Verfahren nach einem der vorangehenden Ansprüche umfasst.

9. Erfassungsvorrichtung zum Erfassen der Winkelgeschwindigkeit einer Motorwelle nach einem Verfahren gemäß einem der vorhergehenden Ansprüche, umfassend:
- einen Eingang, der eingerichtet ist, an einen Winkelgeber angeschlossen zu werden und von diesem ein Winkelsignal zu empfangen, das Zeitpunkte wiedergibt, an denen die Winkellage der Motorwelle einer Winkelsensorposition einer Vielzahl von vorbestimmten Winkelsensorpositionen entspricht;
- ein Zeitnormal, das mit dem Eingang verbunden ist und Zeitwerte erzeugt, die Zeitpunkten entsprechen, an denen eine erste, zweite und dritte Winkelsensorposition auftreten;
- eine Winkel-Substraktionseinheit, welche mit dem Eingang verbunden ist und die Winkeldifferenz zwischen der ersten und der zweiten Winkelsensorposition und die Winkeldifferenz zwischen der zweiten und dritten Winkelsensorposition ermittelt
- eine Zeit-Substraktionseinheit, welche mit dem Zeitnormal verbunden ist und die Zeitdauer zwischen den Zeitpunkten der ersten und der zweiten Winkelsensorposition sowie die Zeitdauer zwischen den Zeitpunkten der zweiten und der dritten Winkelsensorposition ermittelt,
- eine erste Divisionseinheit, die mit der Winkel-Substraktionseinheit und der Zeit-Substraktionseinheit verbunden ist, und die eine ersten Winkelgeschwindigkeit als Verhältnis von Winkeldifferenz zwischen der ersten und der zweiten Winkelsensorposition zu der Zeitdauer zwischen der ersten und der zweiten Winkelsensorposition ermittelt; und die ferner eine zweite Winkelgeschwindigkeit als Verhältnis der Winkeldifferenz zwischen der zweiten und der dritten Winkelsensorposition zu der Zeitdauer zwischen der zweiten und der dritten Winkelsensorposition ermittelt;
- eine Winkelgeschwindigkeit-Substraktionseinheit, welche die zweite Winkelgeschwindigkeit von der ersten Winkelgeschwindigkeit subtrahiert;
- und eine Glättungseinrichtung, die eine Summe aus einem Ausgabe-Winkelgeschwindigkeitswert, der der zweiten Winkeisensorposition zugeordnet ist, und einem Anteil der Winkelgeschwindigkeitsänderung bildet, wobei der Anteil kleiner als die Winkelgeschwindigkeitsänderung ist.

10. Vorrichtung nach Anspruch 9, **dadurch gekennzeichnet, dass** die Vorrichtung einen Ausgang zur Ausgabe eines bereinigten Winkelgeschwindigkeitsignals und einen Signalgenerator umfasst, der den Ausgabe-Geschwindigkeitswert ausgibt, welcher mit dem vorangehenden Ausgabe-Geschwindigkeitswerts beginnt und auf den Winkelgeschwindigkeitsendwert streng monoton ansteigt.

## Claims

1. Method for detecting the angular velocity of a motor shaft, comprising:
- detecting an angle signal from a time-discrete angle encoder, which signal represents times at which the angular position of the motor shaft corresponds to an angle sensor position of a multiplicity of predetermined angle sensor positions;
- detecting the times at which a first angle sensor position, a second angle sensor position and a third angle sensor position occur, which positions are provided in succession in this order;
- determining a first angular velocity by determining the ratio of the angle difference between the first and second angle sensor positions to the period of time between the times of the first and second angle sensor positions; and
- determining a second angular velocity by determining the ratio of the angle difference between the second and third angle sensor positions to the period of time between the times of the second and third angle sensor positions;
**characterized by**
- determination of an angular velocity change between the second and first angular velocities; and
- output of an output angular velocity, which is assigned to the third angular position, as a sum of an output angular velocity, which is assigned to the second angular position, and a proportion of the angular velocity change which is less than the angular velocity change.

2. Method according to Claim 1, the proportion of the angular velocity change for the output angular velocity, which is assigned to the third angular position, being proportional to a difference between the angular velocity change and a predetermined threshold value, being zero for an angular velocity change which is not greater than a predetermined threshold value and corresponding to a predetermined proportion value of one or less than one for angular velocity changes which are above a predetermined threshold value, or being equal to zero irrespective of the magnitude of the angular velocity change.

3. Method according to Claim 1, the output angular velocity being provided for an angle range which begins with the third angular position and during which the output angular velocity is provided, at least for an angle range section which begins with the third angular position, as the sum of the output angular velocity, which is assigned to the second angular position, and an increasing proportion of the angular velocity change which is less than the angular velocity change within the entire angle range or angle range section.

4. Method according to Claim 3, the proportion of the angular velocity change being increased during the angle range section, starting from a first proportion value, in a monotonously or strictly monotonously increasing manner to a second proportion value which is greater than the first proportion value and is less than one.

5. Method according to Claim 3, the proportion being increased according to a predetermined profile during the angle range section; increasing linearly to a constant proportion of the angular velocity change or to a proportion of the angular velocity change which is dependent on the magnitude of the angular velocity change and is less than one; increasing according to a profile whose time derivative for the entire angle range section is below a predetermined threshold value and whose time derivative is zero at the beginning or at the end of the angle range section and increases in a strictly monotonous manner during the angle range section; which is one at the end of the angle range section or has a combination of these profile features.

6. Method according to Claim 3, the angle range section or the angle range having an end which corresponds to a fourth angle sensor position of the multiplicity of angle sensor positions, which position is after the third angle sensor position.

7. Method according to one of the preceding claims, the angle sensor positions of the multiplicity of angular positions corresponding to directly successive angular positions which result from uniform division of a complete revolution by an integer N.

8. Method for controlling an angular velocity of the motor shaft of a motor, the angular velocity being detected in accordance with the method according to one of the preceding claims, and the motor being controlled according to a desired angular velocity and the output angular velocity provided as an input variable, or the angular velocity being detected according to the steps of detecting the angle signal, detecting the times and determining the first and second angular velocities in accordance with the method according to one of the preceding claims, and a step of the desired/actual comparison, which is carried out as part of the control step, comprising the determination of an angular velocity change and the output of the output angular velocity as an actual angular velocity in accordance with the method according to one of the preceding claims.

9. Detection apparatus for detecting the angular velocity of a motor shaft in accordance with a method according to one of the preceding claims, comprising:
- an input which is set up to be connected to an angle encoder and to receive, from the latter, an angle signal which represents times at which the angular position of the motor shaft corresponds to an angle sensor position of a multiplicity of predetermined angle sensor positions;
- a time standard which is connected to the input and generates time values which correspond to times at which a first angle sensor position, a second angle sensor position and a third angle sensor position occur;
- an angle subtraction unit which is connected to the input and determines the angle difference between the first and second angle sensor positions and the angle difference between the second and third angle sensor positions;
- a time subtraction unit which is connected to the time standard and determines the period of time between the times of the first and second angle sensor positions and the period of time between the times of the second and third angle sensor positions;
- a first division unit which is connected to the angle subtraction unit and to the time subtraction unit and determines a first angular velocity as the ratio of the angle difference between the first and second angle sensor positions to the period of time between the first and second angle sensor positions and also determines a second angular velocity as the ratio of the angle difference between the second and third angle sensor positions to the period of time between the second and third angle sensor positions;
- an angular velocity subtraction unit which subtracts the second angular velocity from the first angular velocity;
- and a smoothing device which forms a sum of an output angular velocity value, which is assigned to the second angle sensor position, and a proportion of the angular velocity change, the proportion being less than the angular velocity change.

10. Apparatus according to Claim 9, **characterized in that** the apparatus comprises an output for outputting a corrected angular velocity signal and a signal generator which outputs the output velocity value which begins with the previous output velocity value and increases to the angular velocity end value in a strictly monotonous manner.

## Revendications

1. Procédé de saisie de la vitesse angulaire d'un arbre moteur, le procédé comportant les étapes qui consistent à :
saisir un signal d'angle d'un détecteur d'angle à cadençage temporel qui représente les instants auxquels la position angulaire de l'arbre moteur correspond à une parmi plusieurs positions prédéterminées du détecteur d'angle,
saisir les instants auxquels une première, une deuxième et une troisième position du détecteur d'angle prévues dans cette succession sont atteintes,
déterminer une première vitesse angulaire par détermination du rapport entre la différence angulaire entre la première et la deuxième position du détecteur d'angle et la durée qui s'est écoulée entre les instants auxquels la première et la deuxième position du détecteur d'angle sont atteintes et
déterminer une deuxième vitesse angulaire par détermination du rapport entre la différence angulaire entre la deuxième et la troisième position du détecteur d'angle et la durée qui s'est écoulée entre les instants auxquels la deuxième et la troisième position du détecteur d'angle sont atteintes,
**caractérisé par** les étapes qui consistent à
déterminer une modification entre la première et la deuxième vitesse angulaire et
- délivrer une vitesse angulaire de sortie associée à la troisième position angulaire en tant que somme d'une vitesse angulaire de sortie associée à la deuxième position angulaire et d'une fraction de la modification de vitesse angulaire inférieure à la modification de la vitesse angulaire.

2. Procédé selon la revendication 1, dans lequel la fraction de la modification de la vitesse angulaire de la vitesse angulaire de sortie qui est associée à la troisième position angulaire est proportionnelle à la différence entre la modification de vitesse angulaire et une valeur de seuil prédéterminée, est nulle pour une modification de vitesse angulaire non supérieure à une valeur de seuil prédéterminée et correspond à une valeur fractionnaire prédéterminée de un ou plus petite que un pour des modifications de vitesses angulaire situées au-dessus d'une valeur de seuil prédéterminée, ou est nulle indépendamment du niveau de la modification de vitesse angulaire.

3. Procédé selon la revendication 1, dans lequel la vitesse angulaire de sortie est prévue pour un intervalle angulaire qui commence avec la troisième position angulaire et sur lequel, au moins pour une partie de l'intervalle angulaire qui commence avec la troisième position angulaire, la vitesse angulaire de sortie est la somme de la vitesse angulaire de sortie associée à la deuxième position angulaire et d'une partie croissante de la modification de la vitesse angulaire qui est inférieure à la modification de la vitesse angulaire à l'intérieur de la totalité de l'intervalle angulaire ou de la partie de l'intervalle angulaire.

4. Procédé selon la revendication 3, dans lequel pendant la partie d'intervalle angulaire, la partie de la modification de la vitesse angulaire est augmentée de manière monotone ou strictement monotone depuis une première valeur partielle jusqu'à une deuxième valeur partielle supérieure à la première valeur partielle et inférieure à un.

5. Procédé selon la revendication 3, dans lequel la fraction est augmentée selon une courbe prédéterminée pendant la partie de l'intervalle angulaire, est maintenue linéairement à une constante, la fraction de la modification de vitesse angulaire qui dépend du niveau de la modification de vitesse angulaire augmente en restant plus petite que un, augmente selon une courbe dont la dérivée par rapport au temps pendant toute la partie de l'intervalle angulaire reste en dessous d'une valeur de seuil prédéterminée dont la dérivée par rapport au temps est nulle au début ou à la fin de la partie de l'intervalle angulaire et augmente de façon strictement monotone pendant la partie de l'intervalle angulaire, vaut un à la fin de la partie de l'intervalle angulaire, ou présente une combinaison de ces caractéristiques d'évolution.

6. Procédé selon la revendication 3, dans lequel la fin de la partie de l'intervalle angulaire ou de l'intervalle angulaire correspond à une quatrième des différentes positions du détecteur d'angle située après la troisième position du détecteur d'angle.

7. Procédé selon l'une des revendications précédentes, dans lequel les positions du détecteur d'angle correspondent aux différentes positions angulaires de positions angulaires directement successives et qui s'établissent par une division uniforme d'un tour complet par un nombre N entier.

8. Procédé de régulation de la vitesse angulaire de l'arbre d'un moteur, la vitesse angulaire étant saisie à l'aide du procédé selon l'une des revendications précédentes,
le moteur étant régulé selon une vitesse angulaire de consigne et la vitesse angulaire de sortie prévue comme grandeur d'entrée, ou
la vitesse angulaire étant saisie par les étapes de saisie du signal angulaire, de saisie des instants et de détermination de la première et de la deuxième vitesse angulaire à l'aide du procédé selon l'une des revendications précédentes, et
une étape de comparaison entre grandeur de consigne et grandeur effective étant exécutée en tant que partie de l'étape de régulation,
la détermination d'une modification de la vitesse angulaire et la sortie de la vitesse angulaire de sortie en tant que vitesse angulaire effective étant réalisées à l'aide du procédé selon l'une des revendications précédentes.

9. Dispositif de saisie servant à saisir la vitesse angulaire de l'arbre d'un moteur à l'aide d'un procédé selon l'une des revendications précédentes, le dispositif comportant :
une entrée conçue pour être raccordée à un émetteur d'angle et pour recevoir de ce dernier un signal d'angle qui indique les instants auxquels la position angulaire de l'arbre du moteur correspond à une position de détecteur d'angle parmi plusieurs positions prédéterminées du détecteur d'angle,
une normalisation temporelle associée à l'entrée et qui délivre des valeurs temporelles qui correspondent aux instants auxquels une première, une deuxième et une troisième position du détecteur d'angle sont atteintes,
une unité de soustraction d'angles reliée à l'entrée et qui détermine la différence angulaire entre la première et la deuxième position du détecteur d'angle ainsi que la différence angulaire entre la deuxième et la troisième position du détecteur d'angle,
une unité de soustraction du temps qui est raccordée à la normale temporelle et qui détermine la durée qui s'écoule entre les instants auxquels la première et la deuxième position du détecteur d'angle sont atteintes ainsi que la durée qui s'écoule entre les instants auxquels la deuxième et la troisième position du détecteur d'angle sont atteintes,
une première unité de division qui est reliée à l'unité de soustraction d'angle et à l'unité de soustraction du temps et qui détermine une première vitesse angulaire en tant que rapport entre la différence angulaire entre la première et la deuxième position du détecteur d'angle et la durée qui s'écoule entre les instants auxquels la première et la deuxième position du détecteur d'angle sont atteintes et qui détermine en outre une deuxième vitesse angulaire en tant que rapport entre la différence angulaire entre la deuxième et le troisième position du détecteur d'angle et la durée qui s'écoule entre les instants auxquels la deuxième et la troisième position du détecteur d'angle sont atteintes,
une unité de soustraction de vitesses angulaires qui soustrait la deuxième vitesse angulaire de la première vitesse angulaire et
un dispositif de lissage qui forme une somme d'une valeur de vitesse angulaire de sortie associée à la deuxième position du détecteur d'angle et d'une fraction de la modification de la vitesse angulaire, la fraction étant inférieure à la modification de la vitesse angulaire.

10. Dispositif selon la revendication 9, **caractérisé en ce que** le dispositif comporte une sortie qui délivre un signal nettoyé de vitesse angulaire et un générateur de signaux qui délivre la valeur de vitesse de sortie qui commence à la valeur précédente de vitesse de sortie et qui augmente de façon strictement monotone jusqu'à la valeur finale de la vitesse angulaire.
